# EUROPEAN PATENT APPLICATION

(11) **EP 0 554 206 A1**
(43) Date of publication of application: **04.08.1993**
(21) Application number: 93610009.8
(22) Date of filing: 28.01.1993
(51) Int. Cl.: A22B 5/00, A61L 15/07

(54) **Apparatus for freeing the rectum on slaughter animals**

(30) Priority: 31.01.1992 DK 121/92
(71) Applicant: DANFOTECH AALBORG A/S, DK-9100 Aalborg (DK)
(72) Inventor: Krogh, Knud, DK-9440 Aabybro (DK)
(74) Representative: Schoenning, Soeren

(57) **Abstract**

Apparatus for cutting free the rectum of hogs to be slaughtered and comprising a tubular knife (6), which is rotatable around and displaceable along its longitudinal axis, and an inner holding and controlling means (5) adapted, while the axially displaceable knife (6) advances to make the cut, to centre the knife in relation to the anus of the animals, and, after the cut has been made, to hold the rectum, which has been cut free.

To obtain a safe hold without using devices getting in touch with the interior of the gut or which necessitate the use of vacuum in the interior of the rotating knife, the holding and controlling means (5) comprises at least one movable hook (7), which by activating a drive means (8) connected with the hook (7) is adapted to be taken through the skin and out again in the area immediately adjacent to the anus of the animal.

The holding and controlling means minimize the risk of visceral contents leaking from the anus during the cutting free and the subsequent removal of the rectum.

## Description

The present invention relates to an apparatus for cutting free the rectum of hogs to be slaughtered and comprises a tubular knife, which is rotatable around and displaceable along its longitudinal axis, and an inner holding and controlling means adapted, while the axially displaceable knife advances to make the cut, to centre the knife in relation to the anus of the animals, and, after the cut has been made, to hold the rectum, which has been cut free.

Apparatuses of this kind are to a high extent used in slaughter lines in slaughteries for cutting free the rectum of hogs, which are suspended from their back feet in a pair of hooks and by means of this suspension conveyed through the various stations on the slaughter line. The first step, before eviscerating the animal, is cutting free the area, in which the rectum discharges. This job is heavy to carry out manually, and to facilitate the operation an apparatus is therefore used in most cases, said apparatus comprising a rotating, tubular knife, which so to speak bores out the rectum. This apparatus may be a hand tool, but may also be mounted in a frame fixedly connected to the slaughter line, said frame comprising the necessary adjusting possibilities for bringing the rotating knife in position opposite the anus and for allowing the axial displacement of the rotating knife. The known apparatuses are made in such a way that the knife prior to the cutting process and during the process is centered by means of a gauge introduced into the anus, which obviously ensures that the cut gets the correct position.

A drawback when using the gauge is that the risk of the rectum sliding off the gauge during the cutting process and sinking into the interior of the hog is considerable, and when this happens there is a considerable possibility that the visceral contents will pollute the body of the animal either on the surface or the edges appearing by the opening of the hog's body. In order to reduce this risk it is commonly used to establish a vacuum in the interior of the knife, which prevents the rectum from sliding back into the hog during or after the cutting process. However, the vacuum enhances the risk of visceral contents flowing out through the anus around the gauge and thus does not present a completely satisfactory solution to the hygienic problems in connection with the introductory steps of the removal of the visceral contents of the animals to be slaughtered.

The object of the invention is to improve the known apparatus in such a way that the risk of visceral content leaking out through the anus is reduced.

This object is met according to the invention in that the apparatus is characteristic by the subject matter of the characterizing clause of claim 1.

The apparatus according to the invention is provided with a hook replacing the gauge as a holding and controlling means during the advancing of the knife and during the cutting process. The hook is introduced and taken out again through the skin immediately adjacent to the anus, whereby a completely safe and stable holding of the apparatus during the cutting process is achieved. This holding can be maintained also after the knife has been retracted and can be used for pulling the rectum, which has been cut free, completely out of the body of the animal, in such a way that it is grasped by other devices before the hook is retracted from the skin. As the grip is not dependent on vacuum and the anus itself is not touched, the risk of visceral contents leaking is eliminated in practice, and the pulling out of the gut can be performed without increasing this risk. As, however, the hooks do not touch the interior of the gut, neither their insertion nor their retraction entail a risk of reducing the hygiene.

Advantageous embodiments of the apparatus can be seen from claims 2 - 5.

The invention will be described in the following in detail with reference to the accompanying drawing, in which:
Fig. 1 schematically shows an apparatus according to the invention seen from the side, and
Fig. 2 is a longitudinal view through an embodiment of a holding and controlling means on the apparatus according to the invention.

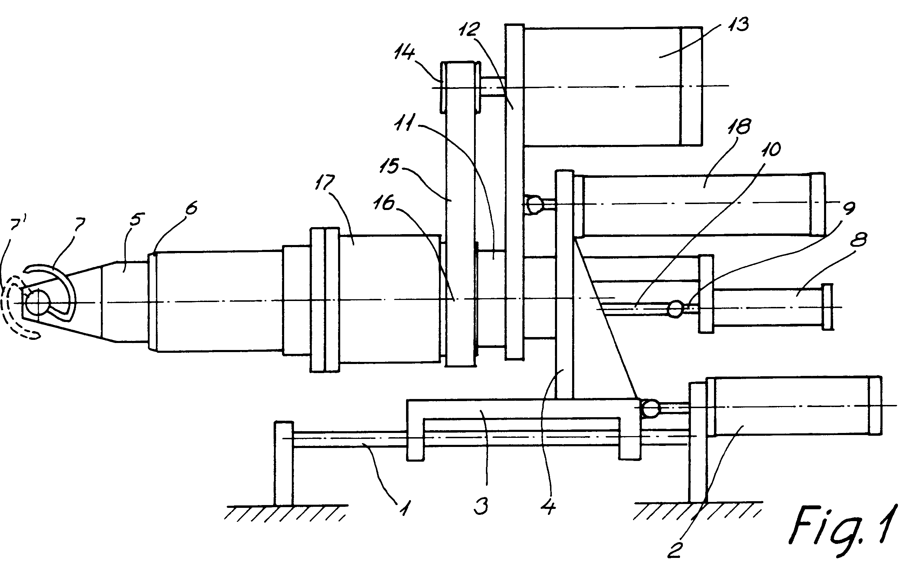

The apparatus shown in Fig. 1 for cutting free the rectum of a slaughter pig is shown in an embodiment, which will be suited for being mounted in a permanent station on a slaughter line. The apparatus can be adapted to be mounted in a device of the kind described in patent application no. 2190/88. The apparatus is placed on a rail 1 pivotally mounted in the device mentioned in the patent application. The apparatus as a whole is displaceable in relation to this rail by means of a driving cylinder 2 connected with a slide 3, which is displaceable on the rail 1. On the slide 3 a carrier console 4 is mounted, to which console a holding and controlling means 5 is connected. On the holding and controlling means 5 a rotating, tubular knife 6 is pivotally mounted, said holding and controlling means being provided with hooks 7, which can hold the rectum of the hog to be slaughtered, while it is being cut free by means of the knife 6. The rail 1 runs parallel with the longitudinal axis of the holding and controlling means 5, and it thereby becomes possible, when the positioning of the anus, which makes up the area, around which the cut is to be made, has been determined, for instance by the method disclosed in the above-mentioned patent application, to advance the holding and controlling mans 5 towards the rectum in such a way that the holding means 5 exactly hits the anus. In this position the hook 7 is turned from the position shown in full lines to the position shown in dotted lines. The hook 7 is placed at the end of a shaft 24, which cuts the axis of the controlling means 5 and has a length corresponding to sligthly more than the diameter of the sphincter around the anus, said sphincter being normally termed the crown. When turning the hook it therefore penetrates through the skin around the crown, and on account of its shape and turning angle it will, after having penetrated through the skin, come out again through the skin adjacent to the starting point. By means of the hook the rectum becomes fixed in relation to the controlling means. The hook is activated by means of a driving cylinder 8 placed at the opposite end of the controlling means. The driving cylinder has a piston 9 connected to a sliding spindle 10 passed through the controlling means 5 to its front end, where it is in driving connection with the shaft of the hook 7.

The cut, by which the rectum is cut free, is performed with a rotating knife 6 pivotally connected with a sliding sleeve 11, which is displaceable along the controlling means 5. A motor console 12 is mounted on the sliding sleeve 11, said console carrying a drive motor 13 for the rotating knife. The shaft of the driving motor carries a gear 14, which by means of a toothed belt 15 drives a toothed rim 16 on the rear end of the rotating knife 6. The sleeve 17 houses a pair of ball bearings on which the rotating knife 6 is resting and which by means of not shown means makes it possible to disassemble it, when it needs sharpening. The displacement of the rotating knife in relation to the holding and controlling means 5 takes place by means of a driving cylinder 18 mounted on the console 4. The piston rod of the driving cylinder is connected with the motor console 12.

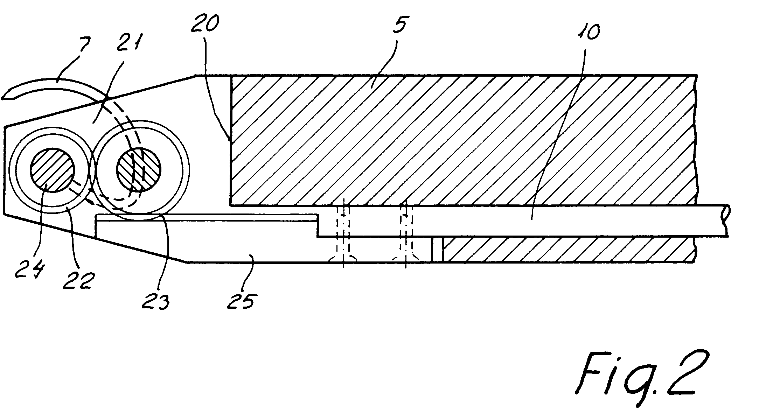

Fig. 2 is a sectional view of the front part of the holding and controlling means 5. The front end is pointed and made somewhat smaller than the holding and controlling means 5 generally. The pointed part is provided with a groove, the bottom of which is marked by 20, the foremost part building a fork. Between the prongs 21 of the fork two gears 22 and 23 in mutual engagement are shown. The gear 22 is placed on a shaft 24 journalled in a bore through the prongs of the fork, and at each of the protruding ends of the shaft a hook 7 is mounted. It is possible to use only one hook placed at one of the ends of the shaft, but it is preferred to place a hook at each end of the shaft 24. The gear 23 is in driving connection with a toothed rack 25, which is connected with the sliding spindle 10. If the sliding spindle is pressed towards left on Fig. 2, the gear 23 will be driven clockwise and the gear 22 driven anticlockwise. By this turning the hooks will be turned to the position shown by 7' in Fig. 1.

The hooks 7 comprise a portion with constant radius in relation to the rotational axis of the shaft 24, said portion extending over an angle of approx. 120°. This angle corresponds approximately to the turning angle of the hooks 7, and when the starting point of the hooks, as shown in Fig. 2, is such that the points of the hooks are in line with the end of the holding and controlling means, the hooks will on account of the turning penetrate so far into the skin around the crown that they come out again. With two, simultaneously inserted hooks the rectum will be held in a most stable way.

The hooks are introduced before the knife 6 is brought in rotation and displaced axially along the holding and controlling means 6. The dimensions of the hooks are such that the rotating knife may pass the hooks. When the cut has been made to the desired depth by the axial displacement of the sleeve 11, the holding means and the knife are retracted simultaneously, and then the knife is pushed back in relation to the holding means. Thereby, the rectum is pulled out of the carcass of the hog to be slaughtered, and it thereby becomes possible to catch the rectum and the gut, which accompanies the rectum, and to keep it outside the carcass of the hog, while the lock, which is the bone closing the arch, which the pelvis of the animal has on its ventral side, is cut, and measures for eviscerating the animals are taken. On account of the safe hold in the skin around the crown the risk of visceral contents leaking from the anus during the cutting is minimized.

## Claims

1. Apparatus for cutting free the rectum of hogs to be slaughtered and comprising a tubular knife (6), which is rotatable around and displaceable along its longitudinal axis, and an inner holding and controlling means (5) adapted, while the axially displaceable knife (6) advances to make the cut, to centre the knife in relation to the anus of the animals, and, after the cut has been made, to hold the rectum, which has been cut free,
**characterized** in that the holding and controlling means (5) comprises at least one movable hook (7), which by activating a drive means (8) connected with the hook (7) is adapted to be taken through the skin and out again in the area immediately adjacent to the anus of the animal

2. Apparatus according to claim 1,
**characterized** in that the hook/hooks (7) is/are pivotally positioned on a shaft (24) running perpendicularly to the axis of the knife and in that the path of the hook/each hook over a part of the length extending over an angle of approx. 120° counted from its vertex runs with a constant radius in relation to the centre line of the shaft (24).

3. Apparatus according to claim 2,
**characterized** in that the holding and controlling means (5) comprises a fork-shaped portion, between the prongs (21) of which (21) a gear (22) on the shaft (24) carrying the hooks is placed, said gear being in driving connection with an activating means (10,25) led through the holding and controlling means.

4. Apparatus according to claim 3,
**characterized** in that the activating means is a rack (25), which at its rear end is connected to a pneumatic cylinder (8) and at its front end engages an intermediate gear (23), which is in driving engagement with the gear (22) on the shaft (24) carrying the hooks.

5. Apparatus according to claims 1-4,
**characterized** in that the holding and controlling means (5) comprises two hooks (7) adapted to be introduced in the area at either side of the anus.
